# EUROPÄISCHE PATENTSCHRIFT

(11) **EP 1 474 460 B1**
(45) Veröffentlichungstag und Bekanntmachung des Hinweises auf die Patenterteilung: **07.01.2009**
(21) Anmeldenummer: 03737273.7
(22) Anmeldetag: 24.01.2003
(51) Int. Cl.: C08G 18/10, C09K 3/10

(54) **ALKOXYSILAN- UND OH-ENDGRUPPEN AUFWEISENDE POLYURETHANPREPOLYMERE MIT ERNIEDRIGTER FUNKTIONALITÄT, EIN VERFAHREN ZU IHRER HERSTELLUNG SOWIE IHRE VERWENDUNG**
POLYURETHANE PREPOLYMERS WITH REDUCED FUNCTIONALITY COMPRISING ALKOXYSILYL AND OH TERMINAL GROUPS, A METHOD FOR PRODUCTION AND USE THEREOF
PREPOLYMERES POLYURETHANNES A FONCTIONNALITE REDUITE, CONTENANT DES GROUPES TERMINAUX ALCOXYSILANES ET OH, PROCEDE DE PRODUCTION ET UTILISATION DESDITS PREPOLYMERES

(30) Priorität: 05.02.2002 DE 10204523
(43) Veröffentlichungstag der Anmeldung: 10.11.2004
(73) Patentinhaber: Bayer MaterialScience AG, 51368 Leverkusen (DE)
(72) Erfinder: LUDEWIG, Michael, 51065 Köln (DE); MATNER, Mathias, 41464 Neuss (DE); GROTH, Stefan, 51375 Leverkusen (DE); RUTTMANN, Gerhard, 51399 Burscheid (DE)
(86) Internationale Anmeldenummer: PCT/EP2003/000760
(87) Internationale Veröffentlichungsnummer: WO 2003/066701

(56) Entgegenhaltungen:
- EP-A- 0 096 249
- EP-A- 0 931 800
- EP-A- 0 994 138
- DE-A- 19 849 817

## Beschreibung

Die Erfindung betrifft Alkoxysilan- und OH-Endgruppen aufweisende Polyurethanprepolymere auf Basis von hochmolekularen Polyurethanprepolymeren mit erniedrigter Funktionalität, ein Verfahren zu ihrer Herstellung durch vorzeitige Terminierung der Aufbaureaktion sowie ihre Verwendung als Bindemittel für niedermodulige Dichtstoffe und Klebstoffe.

Alkoxysilanfunktionelle Polyurethane, die über eine Silanpolykondensation vernetzen sind lange bekannt. Ein Übersichtsartikel zu dieser Thematik findet sich z.B. in "Adhesives Age" 4/1995, Seite 30 ff. (Autoren: Ta-Min Feng, B. A. Waldmann). Derartige Alkoxysilan-terminierte, feuchtigkeitshärtende Einkomponenten-Polyurethane werden in zunehmendem Maße als weichelastische Beschichtungs-, Dichtungs- und Klebemassen im Bauwesen und in der Automobilindustrie verwendet. Bei diesen Anwendungen werden hohe Anforderungen an das Dehn-, Adhäsionsvermögen und an die Aushärtegeschwindigkeit gestellt. Besonders das im Baubereich geforderte Eigenschaftsniveau konnte von diesen Systemen allerdings nicht in vollem Umfang erreicht werden.

In der EP-A-596 360 werden Alkoxysilyl-funktionelle Polyurethanprepolymere beschrieben, die sich als Dichtstoffbindemittel eignen. Die in dieser Patentanmeldung explizit beschriebenen Produkte erreichen aufgrund der Verwendung von relativ kurzkettigen KOH-katalytisch hergestellten Polyethern mit hohem Anteil an endständigen C=C-Doppelbindungen aber nicht das hohe Molekulargewicht, das zur Herstellung weicher und niedermoduliger Dichtstoffe, wie sie im Baubereich eingesetzt werden, notwendig ist.

Ein als Baudichtstoff verwendbares Alkoxysilyl-funktionelles Polyurethanprepolymer wird in der WO 00/26271 beschrieben. Dabei wird ein hochmolekularer, durch Doppelmetallcyanid-Katalyse hergestellter Polypropylenoxid-Polyether als Grundlage verwendet, der bei der Prepolymersynthese in Kombination mit der-Verwendung sekundärer Aminosilane eine verhältnismäßig geringe Viskosität garantiert. Solche Verbindungen haben bei einem (aus NCO und Funktionalität berechneten) mittleren Molekulargewichten von mehr als 15.000g/mol durchaus ein geeignetes Eigenschaftsprofil, um als Baudichtstoffe verwendet werden zu können. Allerdings sind auch die Viskositäten solcher Systeme recht hoch, was deren Anwendbarkeit erheblich einschränkt.

Die DE-A 3629237 beschreibt ein Alkoxysilyl-funktionelles Polyurethan-System, das durch Reduzierung der Funktionalität ein besseres Dehnvermögen erreicht. Dies wird erreicht, indem entweder mit Monoalkoholen oder durch den Einsatz von Monoisocyanaten Funktionalität nachträglich verringert wird. Das Eigenschaftsniveau eines Baudichtstoffs wird so aber nicht erreicht.

Aus der WO 92/05212 sind lagerstabile Alkoxysilyl-terminierte Polyurethanprepolymere bekannt. Sie haben jedoch trotz relativ geringer mittlerer Molekülmassen eine sehr hohe Viskosität. Außerdem wird zur Verringerung ihrer Funktionalität durch Einsatz von Monoalkoholen ein weiterer Reaktionsschritt benötigt.

In der WO 99/48942 wird die Verwendung von hochmolekularen Polyethern unter anderem bei der Herstellung von Dichtstoffprepolymeren beschrieben. Dabei wird unter anderem ein Reaktivverdünnerkonzept vorgestellt, das auch den Einsatz niedrigfunktioneller Komponenten beinhaltet. Die Eigenschaften des resultierenden ausgehärteten Polymers sollen dabei weitgehend unberührt bleiben. Dies erfordert allerdings offensichtlich die Synthese eines zweiten Polyurethans.

Es sind auch Prepolymere bekannt geworden, die grundsätzlich Alkoxysilan- und OH-Endgruppen enthalten. In der DE-A 3 220 865 wird ein Haftkleber auf Basis solcher Verbindungen beschrieben. Diese DE-A beschreibt die Synthese mit Addukten aus Diisocyanat und Aminosilanen, was allerdings den Nachteil einer Zweistufen-Synthese beeinhaltet. Außerdem wird sich auch das Diaddukt aus zwei Molekülen Aminosilan und Diisocyanat bilden, teures Aminosilan geht so verloren und erzeugt eine höhere Härte, die im Dichtstoffbereich unerwünscht ist.

Aufgabe der vorliegenden Erfindung war es daher, Alkoxysilan-Endgruppen aufweisende Polyurethanprepolymere bereitzustellen, die die im Stand der Technik dargelegten Nachteile überwinden. Diese Aufgabe konnte mit der Bereitstellung der nachstehend näher beschriebenen Alkoxysilan- und OH-Endgruppen aufweisenden Polyurethanprepolymere auf Basis von hochmolekularen Polyurethanprepolymeren gelöst werden.

Gegenstand der Erfindung sind also Alkoxysilan- und OH-Endgruppen aufweisende Polyurethanprepolymere erhältlich durch Umsetzung von
A) Polyurethanprepolymeren, hergestellt durch unvollständige, bei einem Umsatz von 50 bis 90 % der OH-Gruppen der Polyolkomponente, vorzugsweise 70-85 % der OH-Gruppen der Polyolkomponente, gestoppte Umsetzung von
   i) einer aromatischen, aliphatischen oder cycloaliphatischen Diisocyanatkomponente mit einem NCO-Gehalt von 20 bis 60 Gew.-% mit
   ii) einer Polyolkomponente, die aus einem Polyoxyalkylendiol besteht das ein Molekulargewicht von 3000 bis 20000 aufweist, mit
B) Alkoxysilan- und Aminogruppen aufweisenden Verbindungen der Formel (I) 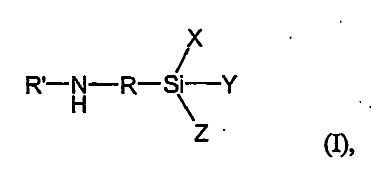
in welcher
- X, Y, Z: für gleiche oder verschiedene gegebenenfalls verzweigte C₁-C₈-Alkyl- oder C₁-C₈-Alkoxyreste stehen, mit der Maßgabe, dass mindestens einer der Reste für eine C₁-C₈-Alkoxygruppe steht,
- R: für gegebenenfalls verzweigte Alkylenradikale mit 1 bis 8 Kohlenstoffatomen, vorzugsweise 1 bis 4 Kohlenstoffatomen steht,
- R': für Wasserstoff, gegebenenfalls verzweigte Alkylreste, Arylreste oder Reste der allgemeinen Formel (II) steht, 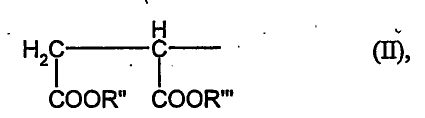 wobei
- R" und R''': für gleiche oder verschiedene, gegebenenfalls verzweigte Alkylreste mit 1 bis 8 Kohlenstoffatomen, vorzugsweise 1 bis 4 Kohlenstoffatomen stehen.

Vorzugsweise stehen in Formel (I) X, Y und Z unabhängig voneinander für Methoxy oder Ethoxy; für R' ist ein Rest der allgemeinen Formel (II) bevorzugt.

Die Erniedrigung der Funktionalität der erfindungsgemäßen Prepolymeren führt zu einem niedermoduligeren Polymer. Dadurch können Prepolymere mit verhältnismäßig geringer mittlerer Molekülmasse und geringer Viskosität zur Erreichung eines hohen Eigenschaftsniveaus verwendet werden. Das erfindungsgemäße Prepolymer erreicht dieses Profil durch unvollständige Umsetzung der OH-Gruppen der eingesetzten Polyether mit einem Diisocyanat und anschließender Terminierung der endständigen NCO-Gruppen durch Aminosilane. Dabei wurde überraschenderweise gefunden, dass die verbleibenden OH-Gruppen nicht zu einer Verminderung der Lagerstabilität führen und auch beim Aushärten nicht in das Polymerisationsgeschehen eingreifen.

Die erfindungsgemäß einzusetzenden Isocyanatprepolymere A) werden in der aus der Polyurethanchemie an sich bekannten Art und Weise durch Umsetzung einer Diisocyanatkomponente i) mit einer nachstehend näher charakterisierten Polyolkomponente ii) hergestellt.

Als Polyisocyanatkomponente i) erfindungsgemäß einsetzbare Isocyanate sind beliebige aliphatische, cycloaliphatische oder aromatische Diisocyanate des Standes der Technik mit einem Isocyanatgehalt von 20 bis 60 Gew.-%. Unter "aromatischen" bzw. "cycloaliphatischen" Diisocyanaten sind dabei solche zu verstehen, die pro Molekül mindestens einen aromatischen bzw. cycloaliphatischen Ring aufweisen, wobei vorzugsweise, jedoch nicht zwingend, mindestens eine der beiden Isocyanatgruppen direkt mit einem aromatischen bzw. cycloaliphatischen Ring verknüpft ist. Als Komponente i) bzw. Teil der Komponente i) bevorzugt geeignet sind aromatische oder cycloaliphatische Diisocyanate des Molekulargewichtsbereichs 174 bis 300 wie 4,4'-Diphenylmethandiisocyanat, gegebenenfalls im Gemisch mit 2,4'-Diphenylmethandiisocyanat, 2,4-Diisocyanatotoluol dessen technische Gemische mit vorzugsweise bis zu 35 Gew.-%, bezogen auf Gemisch, an 2,6-Diisocyanatotoluol, 1-Isocyanato-3,3,5-trimethyl-5-isocyanatomethylcyclohexan (IPDI), Bis-(4-isocyanatocyclohexyl)methan, 1-Isocyanato-1-methyl-4(3)-isocyanatomethyl-cyclohexan, 1,3-Diisocyanato-6-methyl-cyclohexan, gegebenenfalls im Gemisch mit 1,3-Diisocyanato-2-methylcyclohexan. Selbstverständlich sind auch Mischungen der genannten Isocyanate einsetzbar.

Besonders bevorzugt wird als Komponente i) 1-Isocyanato-3,3,5-trimethyl-5-isocyanatomethylcyclohexan (IPDI).

Zur Herstellung der Polyurethanprepolymere A) wird die Diisocyanatkomponente i) mit einer Polyolkomponente ii) so umgesetzt, dass 10 bis 50 % der OH-Gruppen der Polyolkomponente ii) nicht mit den NCO-Gruppen der Diisocyanatkomponente i) umgesetzt werden, so dass im hergestellten Polyurethanprepolymer A) 50 bis 90 % der OH-Gruppen der Polyolkomponente ii) umgesetzt sind. Als Hauptkomponente enthält die Polyolkomponente ii) ein Polyoxyalkylendiol, das ein Molekulargewicht von 3000 bis 20000 (entsprechend einer OH-Zahl von 37,3 bis 5,6), vorzugsweise 4000 bis 15000 (entsprechend einer OH-Zahl von 28 bis 7,5) aufweist. Die erfindungsgemäß bevorzugt einsetzbaren Polyoxyalkylendiole können auf die aus der Polyurethanchemie an sich bekannten Art durch Ethoxylierung und/oder Propoxylierung geeigneter Startermoleküle hergestellt werden. Geeignete Startermoleküle sind beispielsweise Diole wie Ethylenglykol, Propylenglykol, 1,3-Butandiol, 1,4 Butandiol, 1,6 Hexandiol, 2-Ethylhexandiol-1,3 oder auch primäre Monoamine wie beispielsweise aliphatische Amine wie Ethylamin oder Butylamin. Bevorzugt einsetzbare Polyoxyalkylendiole weisen ein mittleres, aus OH-Gehalt und Funktionalität berechnetes Molekulargewicht von 3000 bis 20000, vorzugsweise 4000 bis 15000 auf und einen Ethylenoxidgehalt von maximal 20 Gew.-%, bezogen auf Gesamtgewicht des Polyoxyalkylendiols.

Ganz besonders bevorzugt werden als Komponente ii) Polypropylenoxidpolyether mit einer terminalen Unsättigung von maximal 0,04 mÄq/g-und einem mittleren, aus OH-Gehalt und Funktionalität berechneten Molekulargewicht von 8000 bis 12000 eingesetzt.

Die erfindungsgemäß besonders bevorzugt einsetzbaren Polyetherpolyole mit niedrigem Unsättigungsgrad sind prinzipiell bekannt und werden beispielhaft beschrieben in den EP-A 283 148, US-A 3 278 457.

Bei der Herstellung der NCO-Prepolymere A) können gegebenenfalls untergeordnete Mengen an niedermolekularen 2 und 3-wertigen Alkoholen des Molekulargewichts 32 bis 500 mitverwendet werden. Beispielhaft genannt seien Ethylenglykol, Propylenglykol, 1,3-Butandiol, 1,4-Butandiol, 1,6-Hexandiol, Glycerin oder Trimethylolpropan. Die Mitverwendung niedermolekularer Alkohole ist aber keineswegs bevorzugt.

Bei der Herstellung der NCO-Prepolymere A) können weiterhin untergeordnete Mengen an polyfunktionellen Polyetherpolyolen des Standes der Technik mitverwendet werden, obwohl auch dies keineswegs bevorzugt ist.

Die Herstellung der erfindungsgemäß als Komponente A) einsetzbaren Polyurethanprepolymere erfolgt durch Umsetzung der Diisocyanatkomponente i) mit der Diolkomponente ii) im Temperaturbereich von 40 bis 120°C, vorzugsweise 50 bis 100°C - unter Einhaltung eines NCO/OH-Äquivalentverhältnisses von 1,2:1 bis 2,0:1, vorzugsweise 1,3:1 bis 1,8:1. Die Reaktion wird gestoppt, sobald eine Umsetzung von 50-90 % der OH-Gruppen der Polyolkomponente, vorzugsweise 70-85 % der OH-Gruppen der Polyolkomponente, erreicht wurde, d.h. die Polyolkomponente noch 10 bis 50 %, vorzugsweise 30 bis 15 % freie, nicht mit NCO-Gruppen umgesetzte OH-Gruppen enthält. Der Umsatz wird nach einem in der Polyurethanchemie üblichen NCO-titrimetrischen Verfahren bestimmt. Das Abstoppen der Reaktion erfolgt durch den Zusatz einer geringen Menge einer mineralischen oder organischen Säure wie etwa Salzsäure, Schwefelsäure, Phosphorsäure oder deren Derivate, Ameisensäure, Essigsäure oder einer anderen Alkan- oder organischen Säure oder einer säurefreisetzenden Komponente, wie etwa Säurehalogenide. Beispielhaft genannt seinen hier Ameisensäurechlorid, Essigsäurechlorid, Propionsäurechlorid und Benzoylchlorid.

Bevorzugt wird erfindungsgemäß der Einsatz von Benzoylchlorid als Stopper.

Gegebenenfalls kann auch auf den Einsatz des Stoppers verzichtet werden und die Aminosilan-Verbindung direkt zugegeben werden. Dabei ist es nötig, zügig vorzugehen, um ein weiteres Fortschreiten der Isocyanat-OH-Reaktion zuungunsten der Isocyanat-NH-Reaktion weitestmöglich zu unterbinden.

Gegebenenfalls können bei der Herstellung der Polyurethanprepolymere die aus der Polyurethanchemie an sich bekannten aminischen oder metallorganischen Katalysatoren mitverwendet werden.

Bei der bevorzugten Ausführungsform der Erfindung wird unter Verwendung von Isophorondiisocyanat Dibutylzinndilaurat als Katalysator beigemischt.

Die erfindungsgemäß einsetzbaren Polyurethanprepolymere A) weisen einen NCO-Gehalt von 0,1 bis 2,6 % auf, vorzugsweise 0,3 bis 2,0 %. Das entspricht je nach Verhältnis von NCO- zu OH-Gruppen einem mittleren Molekulargewicht von 3000 bis 42000, vorzugsweise 4000 bis 20000.

Die erfindungsgemäß einsetzbaren Polyurethanprepolymere A) werden in der zweiten Stufe des erfindungsgemäßen Verfahrens umgesetzt mit Verbindungen der Formel (I) 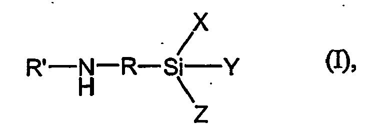 in welcher
- X, Y, Z: für gleiche oder verschiedene, gegebenenfalls verzweigte C₁-C₈-Alkyl- oder C₁-C₈-Alkoxyreste stehen, mit der Maßgabe, dass mindestens einer der Reste für eine C₁-C₈-Akoxygruppe steht,
- R: für gegebenenfalls verzweigte Alkylenradikale mit 1 bis 8 Kohlenstoffatomen, vorzugsweise 1 bis 4 Kohlenstoffatomen stehen,
- R': für Wasserstoff, gegebenenfalls verzweigte Alkylreste, Arylreste oder Reste der allgemeinen Formel (II) stehen, 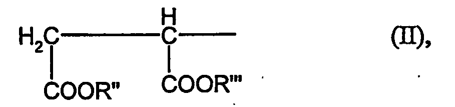 wobei
R" und R''' für gleiche oder verschiedene, gegebenenfalls verzweigte Alkylreste mit 1 bis 8 Kohlenstoffatomen, vorzugsweise 1 bis 4 Kohlenstoffatomen stehen.

Bevorzugt wird eine Alkoxysilan- und Aminogruppen aufweisenden Verbindungen mit der allgemeinen Formel (I) eingesetzt, deren Rest R' der allgemeinen Formel (II) entspricht. Die Herstellung einer solchen Verbindung erfolgt wie in der EP-A 596 360 beschrieben.

Die Umsetzung der NCO-Prepolymeren mit den Alkoxysilan- und Aminogruppen aufweisenden Verbindungen der Formel (I) im erfindungsgemäßen Verfahren erfolgt innerhalb eines Temperaturbereichs von 0 bis 150°C, vorzugsweise 20 - 80°C, wobei die Mengenverhältnisse in der Regel so gewählt werden, dass pro Mol eingesetzter NCO-Gruppen 0,95 bis 1,1 Mol Aminosilanverbindung eingesetzt werden. Vorzugsweise wird pro Mol eingesetzter NCO-Gruppen 1 Mol Aminosilanverbindung eingesetzt. Bei Anwendung höherer Reaktionstemperaturen kann es gemäß der Lehre der EP-A 807 649 zu einer Cyclokondensationsreaktion kommen, die aber keineswegs störend ist und mitunter sogar vorteilhaft sein kann.

Ein weiterer Gegenstand der Erfindung ist die Verwendung der erfindungsgemäßen Alkoxysilan- und OH-Endgruppen aufweisenden Polyurethanprepolymere als Bindemittel zur Herstellung von isocyanatfreien niedermoduligen Polyurethandichtstoffen vorzugsweise für den Baubereich.

Diese Dichtstoffe vernetzen unter Einwirkung von Luftfeuchtigkeit über eine Silanolpolykondensation. Weiterhin eignen sie sich zur Herstellung von Klebstoffen; eine Anwendung in Primem oder Beschichtungen ist ebenfalls denkbar.

Ein weiterer Gegenstand der Erfindung sind Dichtstoffe, Klebstoffe, Primer und Beschichtungen basierend auf den erfindungsgemäßen Alkoxysilan- und OH-Endgruppen aufweisenden Polyurethanprepolymeren.

Zur Herstellung solcher Dichtstoffe können die erfindungsgemäßen Alkoxysilan-Endgruppen aufweisenden Polyurethanprepolymere zusammen mit üblichen Weichmachern, Füllstoffen, Pigmenten, Trockenmitteln, Additiven, Lichtschutzmitteln, Antioxidantien, Thixotropiermitteln, Katalysatoren, Haftvermittlern und gegebenenfalls weiteren Hilfs- und Zusatzstoffen nach bekannten Verfahren der Dichtstoffherstellung formuliert werden.

Als geeignete Füllstoffe seien beispielhaft Ruß, Fällungskieselsäuren, pyrogene Kieselsäuren, mineralische Kreiden und Fällungskreiden genannt. Als geeignete Weichmacher seien beispielhaft Phthalsäureester, Adipinsäureester, Alkylsulfonsäureester des Phenols oder Phosphorsäureester genannt.

Als Thixotropiermittel seien beispielhaft pyrogene Kieselsäuren, Polyamide, hydrierte Rizinusöl-Folgeprodukte oder auch Polyvinylchlorid genannt.

Als geeignete Katalysatoren zur Aushärtung seien Organozinnverbindungen und aminische Katalysatoren genannt.

Als Organozinnverbindungen seien beispielhaft genannt: Dibutylzinndiacetat, Dibutylzinndilaurat, Dibutylzinn-bis-acetoacetonat und Zinncarboxylate wie beispielsweise Zinnoctoat. Die genannten Zinnkatalysatoren können gegebenenfalls in Kombination mit aminischen Katalysatoren wie Aminosilanen oder Diazabicyclooctan verwendet werden.

Als Trockenmittel seien insbesondere Alkoxysilylverbindungen genannt wie Vinyltrimethoxysilan, Methyltrimethoxysilan, i-Butyltrimethoxysilan, Hexadecyltrimethoxysilan.

Als Haftvermittler werden die bekannten funktionellen Silane eingesetzt wie beispielsweise Aminosilane der vorstehend genannten Art aber auch N-Aminoethyl-3-aminopropyl-trimethoxy und/oder N-Aminoethyl-3-aminopropyl-methyl-dimethoxy-silan, Epoxysilane und/oder Mercaptosilane.

Die vernetzten Polymere zeichnen sich aus durch hervorragende Dehnbarkeit bei gleichzeitig niedrigem Modul. Dabei beobachtet man mit sinkendem NCO/OH-Verhältnis bei gleichem Molekulargewicht des Polymers eine Abnahme des Modulus und der Shore-Härte sowie eine Zunahme der Bruchdehnung. Die Zunahme der Oberflächenklebrigkeit ist im bevorzugten Bereich der Erfindung nur gering.

### Beispiele

### Beispiel 1

1004 g eines Polypropylenglykols der OH-Zahl 10,6 (Acclaim^{®} 12200, Bayer AG, Leverkusen) werden sechs Stunden lang im Vakuum (geringer Stickstoffdurchfluss) bei 120°C getrocknet. Dann wird mit 38,0 g Isophorondiisocyanat (Bayer AG, Leverkusen) (Kennzahl 1,8) bei 60°C unter Zugabe von 45 ppm Dibutylzinndilaurat (Desmorapid Z^{®}, Bayer AG, Leverkusen) bis zum Erreichen eines NCO-Gehaltes von 0,76 % (= 80 % Umsatz) prepolymerisiert. Die Reaktion wird durch Beimengung von 50 ppm Benzoylchlorid (Fluka Chemie GmbH, Buchs, Schweiz) gestoppt. Anschließend werden bei 60°C 65,5 g N-(3-Trimethoxysilylpropyl)asparaginsäure-diethylester (hergestellt gemäß EP-A 596 360, Bsp. 5) zügig zugetropft und man rührt, bis im IR-Spektrum keine Isocyanatbande mehr zu sehen ist. Das erhaltene Alkoxysilyl- und OH-Endgruppen aufweisende Polyurethanprepolymer hat eine Viskosität von 41.100 mPas (23°C).

Ein auf eine Glasplatte gegossener Film härtet unter Katalyse von Dynasilan^{®} DAMO (Degussa AG, Frankfurt a. M.) (1,11%), Dibutylzinndiacetat (Goldschmidt AG, Essen) (0,11%) und 1,4-Diazabicyclo[2.2.2]octan (DABCO, Merck KGaA, Darmstadt) (0,19%) über Nacht zu einem klaren, hochelastischen Kunststoff mit einer Shore A-Härte von 24.

### Vergleichsbeispiel zu 1

1004 g eines Polypropylenglykols der OH-Zahl 10,6 (Acclaim^{®} 12200, Bayer AG, Leverkusen) werden sechs Stunden lang im Vakuum (geringer Stickstoffdurchfluss) bei 120°C getrocknet. Dann wird mit 38,0 g Isophorondiisocyanat (Bayer AG, Leverkusen) (Kennzahl 1,8) bei 60°C unter Zugabe von 45 ppm Dibutylzinndilaurat (Desmorapid Z^{®}, Bayer AG, Leverkusen) bis zum Erreichen des theoretischen NCO-Gehaltes von 0,61 % (= 100 % Umsatz) prepolymerisiert. Die Reaktion wird durch Beimengung von 50 ppm Benzoylchlorid (Fluka Chemie GmbH, Buchs, Schweiz) gestoppt. Anschließend werden bei 60°C 53,0 g N-(3-Trimethoxysilylpropyl)asparaginsäure-diethylester (hergestellt gemäß EP-A 596 360, Bsp. 5) zügig zugetropft und man rührt, bis im IR-Spektrum keine Isocyanatbande mehr zu sehen ist. Das erhaltene Alkoxysilyl- Endgruppen aufweisende Polyurethanprepolymer hat eine Viskosität von 108.500 mPas (23°C).

Ein auf eine Glasplatte gegossener Film härtet unter Katalyse von Dynasilan^{®} DAMO (Degussa AG, Frankfurt a. M.) (1,11%), Dibutylzinndiacetat (Goldschmidt AG, Essen) (0,11%) und 1,4-Diazabicyclo[2.2.2]octan (DABCO, Merck KGaA, Darmstadt) (0,19%) über Nacht zu einem klaren, hochelastischen Kunststoff mit einer Shore A-Härte von 39.

### Beispiel 2

1057 g eines Polypropylenglykols der OH-Zahl 10,6 (Acclaim^{®} 12200, Bayer AG, Leverkusen) werden sechs Stunden lang im Vakuum (geringer Stickstoffdurchfluss) bei 120°C getrocknet. Dann wird mit 35,5 g Isophorondiisocyanat (Bayer AG, Leverkusen) (Kennzahl 1,6) bei 60°C unter Zugabe von 45 ppm Dibutylzinndilaurat (Desmorapid Z^{®}, Bayer AG, Leverkusen) bis zum Erreichen eines NCO-Gehaltes von 0,69% (= 70 % Umsatz) prepolymerisiert. Die Reaktion wird durch Beimengung von 50 ppm Benzoylchlorid (Fluka Chemie GmbH, Buchs, Schweiz) gestoppt. Anschließend werden bei 60°C 63,2 g N-(3-Trimethoxysilylpropyl)asparaginsäure-diethylester (hergestellt gemäß EP-A 596 360, Bsp. 5) zügig zugetropft und man rührt, bis im IR-Spektrum keine Isocyanatbande mehr zu sehen ist. Das erhaltene Alkoxysilyl- und OH-Endgruppen aufweisende Polyurethanprepolymer hat eine Viskosität von 37.700 mPas (23°C).

Ein auf eine Glasplatte gegossener Film härtet unter Katalyse von Dynasilan^{®} DAMO (Degussa AG, Frankfurt a. M.) (1,11%), Dibutylzinndiacetat (Goldschmidt AG, Essen) (0,11%) und 1,4-Diazabicyclo[2.2.2]octan (DABCO, Merck KGaA, Darmstadt) (0,19%) über Nacht zu einem klaren, hochelastischen Kunststoff mit einer Shore A-Härte von 17.

### Beispiel 3

1057 g eines Polypropylenglykols der OH-Zahl 10,6 (Acclaim^{®} 12200, Bayer AG, Leverkusen) werden sechs Stunden lang im Vakuum (geringer Stickstoffdurchfluss) bei 120°C getrocknet. Dann wird mit 35,5 g Isophorondiisocyanat (Bayer AG, Leverkusen) (Kennzahl 1,6) bei 60°C unter Zugabe von 45 ppm Dibutylzinndilaurat (Desmorapid Z^{®}, Bayer AG, Leverkusen) bis zum Erreichen eines NCO-Gehaltes von 0,61 % (= 80 % Umsatz) prepolymerisiert. Die Reaktion wird durch Beimengung von 50 ppm Benzoylchlorid (Fluka Chemie GmbH, Buchs, Schweiz) gestoppt. Anschließend werden bei 60°C 56,2 g N-(3-Trimethoxysilylpropyl)-asparaginsäure-diethylester (hergestellt gemäß EP-A 596 360; Bsp. 5) zügig zugetropft und man rührt, bis im IR-Spektrum keine Isocyanatbande mehr zu sehen ist. Das erhaltene Alkoxysilyl- und OH-Endgruppen aufweisende Polyurethanprepolymer hat eine Viskosität von 73.400 mPas (23°C).

Ein auf eine Glasplatte gegossener Film härtet unter Katalyse von Dynasilan^{®} DAMO (Degussa AG, Frankfurt a. M.) (1,1.1%), Dibutylzinndiacetat (Goldschmidt AG, Essen) (0,11%) und 1,4-Diazabicyclo[2.2.2]octan (DABCO, Merck KGaA, Darmstadt) (0,19%) über Nacht zu einem klaren, hochelastischen Kunststoff mit einer Shore A-Härte von 26.

### Vergleichsbeispiel zu 2 und 3

1057 g eines Polypropylenglykols der OH-Zahl 10,6 (Acclaim^{®} 12200, Bayer AG, Leverkusen) werden sechs Stunden lang im Vakuum (geringer Stickstoffdurchfluss) bei 120°C getrocknet. Dann wird mit 35,5 g Isophorondiisocyanat (Bayer AG, Leverkusen) (Kennzahl 1,6) bei 60°C unter Zugabe von 90 ppm Dibutylzinndilaurat (Desmorapid Z^{®}, Bayer AG, Leverkusen) bis zum Erreichen des theoretischen NCO-Gehaltes von 0,46 % (= 100 % Umsatz) prepolymerisiert. Die Reaktion wird durch Beimengung von 50 ppm Benzoylchlorid (Fluka Chemie GmbH, Buchs, Schweiz) gestoppt. Anschließend werden bei 60°C 42,2 g N-(3-Trimethoxysilylpropyl)-asparaginsäure-diethylester (hergestellt gemäß EP-A 596 360, Bsp. 5) zügig zugetropft und man rührt, bis im IR-Spektrum keine Isocyanatbande mehr zu sehen ist. Das erhaltene Alkoxysilyl -Endgruppen aufweisende Polyurethanprepolymer hat eine Viskosität von 166.000 mPas (23°C).

Ein auf eine Glasplatte gegossener Film härtet unter Katalyse von Dynasilan^{®} DAMO (Degussa AG, Frankfurt a. M.) (1,11%), Dibutylzinndiacetat (Goldschmidt AG, Essen) (0,11%) und 1,4-Diazabicyclo[2.2.2]octan (DABCO, Merck KGaA, Darmstadt)(0,19%) über Nacht zu einem klaren, hochelastischen Kunststoff mit einer Shore A-Härte von 37.

### Beispiel 4

### Herstellung eines isocyanatfreien Polyurethandichtstoffs:

In einem handelsüblichen Planetenmischer werden die folgenden Komponenten zu einem gebrauchsfertigen Dichtstoff verarbeitet:

| | |
|---|---|
| 150g | Prepolymer aus Beispiel 2 |
| 90g | Diisodecylphthalat (Weichmacher, Jayflex^{®} DIDP, Exxon Mobile Chemical Corp., Houston, USA) |
| 9g | Vinyltrimethoxysilan (Dynasilan^{®} VTMO, Degussa AG, Frankfurt a. M.) |
| 225g | Fällungskreide (Typ: Socal U1S2^{®}, Solvay Deutschland GmbH, Hannover) |

Die Mischung wird 15 Minuten bei einem Druck von 100 mbar dispergiert, wobei die Innentemperatur auf 60°C ansteigt. Anschließend werden unter Kühlung

| | |
|---|---|
| 4,5g | Dynasilan^{®} DAMO (Degussa AG, Frankfurt a. M.) |

zugegeben und bei einem Druck von 100 mbar durch 5 minütiges Rühren eingearbeitet. Dann werden

| | |
|---|---|
| 4,5g | Tegokat 233^{®} (10%ig in DIDP) (Goldschmidt AG, Essen) |

beigemischt und 10 Minuten bei 100mbar gerührt.

Der so hergestellte Dichtstoff zeigt folgendes Eigenschaftsprofil:

| | |
|---|---|
| Hautbildung (25°C/45% r.F.) | 45min |
| Shore A | 37 |
| Zugfestigkeit | 2,8 N/mm² |
| 100%-Modul | 1,1 N/mm² |
| Reißdehnung | 336% |
| Weiterreißwiderstand | 13,1 N/mm |

Der Dichtstoff zeigt eine geringe Oberflächenklebrigkeit und eine gute Lagerstabilität.

### Beispiel 5

### Herstellung eines isocyanatfreien Polyurethandichtstoffs:

In einem handelsüblichen Planetenmischer werden die folgenden Komponenten zu einem gebrauchsfertigen Dichtstoff verarbeitet:

| | |
|---|---|
| 150g | Prepolymer aus Beispiel 3 |
| 90g | Diisodecylphthalat (Weichmacher, Jayflex^{®} DIDP, Exxon Mobile Chemical Corp., Houston, USA) |
| 9g | Vinyltrimethoxysilan (Dynasilan^{®} VTMO, Degussa AG, Frankfurt a. M.) |
| 225g | Fällungskreide (Typ: Socal U1S2^{®}, Solvay Deutschland GmbH, Hannover) |

Die Mischung wird 15 Minuten bei einem Druck von 100 mbar dispergiert, wobei die Innentemperatur auf 60°C ansteigt. Anschließend werden unter Kühlung

| | |
|---|---|
| 4,5g | Dynasilan^{®} DAMO (Degussa AG, Frankfurt a. M.) |

zugegeben und bei einem Druck von 100 mbar durch 5 minütiges Rühren eingearbeitet. Dann werden

| | |
|---|---|
| 4,5g | Tegokat 233^{®} (10%ig in DIDP) (Goldschmidt AG, Essen) |

beigemischt und 10 Minuten bei 100mbar gerührt.

Der so hergestellte Dichtstoff zeigt folgendes Eigenschaftsprofil:

| | |
|---|---|
| Hautbildung (25°C/45% r.F.) | 35min |
| Shore A | 45 |
| Zugfestigkeit | 3,3 N/mm² |
| 100%-Modul | 1,4 N/mm² |
| Reißdehnung | 343% |
| Weiterreißwiderstand | 12,2 N/mm |

Der Dichtstoff zeigt eine geringe Oberflächenklebrigkeit und eine gute Lagerstabilität.

### Vergleichsbeispiel zu 4 und 5

### Herstellung eines isocyanatfreien Polyurethandichtstoffs:

In einem handelsüblichen Planetenmischer werden die folgenden Komponenten zu einem gebrauchsfertigen Dichtstoff verarbeitet:

| | |
|---|---|
| 150g | Prepolymer aus Vergleichsbeispiel zu 2 und 3 |
| 90g | Diisodecylphthalat (Weichmacher, Jayflex^{®} DIDP, Exxon Mobile Chemical Corp., Houston, USA) |

| | |
|---|---|
| 9g | Vinyltrimethoxysilan (Dynasilan^{®} VTMO, Degussa AG, Frankfurt a. M.) |
| 225g | Fällungskreide (Typ: Socal U1S2^{®}, Solvay Deutschland GmbH, Hannover) |

Die Mischung wird 15 Minuten bei einem Druck von 100 mbar dispergiert, wobei die Innentemperatur auf 60°C ansteigt. Anschließend werden unter Kühlung

| | |
|---|---|
| 4,5g | Dynasilan^{®} DAMO (Degussa AG, Frankfurt a. M.) |

zugegeben und bei einem Druck von 100 mbar durch 5 minütiges Rühren eingearbeitet. Dann werden

| | |
|---|---|
| 4,5g | Tegokat 233^{®} (10%ig in DIDP) (Goldschmidt AG, Essen) |

beigemischt und 10 Minuten bei 100mbar gerührt.

Der so hergestellte Dichtstoff zeigt folgendes Eigenschaftsprofil:

| | |
|---|---|
| Hautbildung (25°C/45% r.F.) | 15min |
| Shore A | 52 |
| Zugfestigkeit | 3,7 N/mm² |
| 100%-Modul | 1,7 N/mm² |
| Reißdehnung | 363% |
| Weiterreißwiderstand | 9,0 N/mm |

Der Dichtstoff zeigt eine sehr geringe Oberflächenklebrigkeit und eine gute Lagerstabilität.

## Patentansprüche

1. Alkoxysilan- und OH-Endgruppen aufweisende Polyurethanprepolymere erhältlich durch Umsetzung von
A) Polyurethanprepolymeren, hergestellt durch unvollständige, bei einem Umsatz von 50 bis 90 % der OH-Gruppen der Polyolkomponente gestoppte Umsetzung von
i) einer aromatischen, aliphatischen oder cycloaliphatischen Diisocyanatkomponente mit einem NCO-Gehalt von 20 bis 60 Gew.-% mit
ii) einer Polyolkomponente, die aus einem Polyoxyalkylendiol besteht, das ein Molekulargewicht von 3000 bis 20000 aufweist
mit
B) Alkoxysilan- und Aminogruppen aufweisenden Verbindungen der Formel (I) 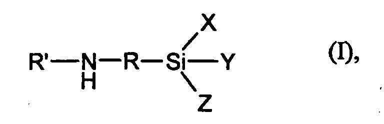 in welcher
X, Y, Z für gleiche oder verschiedene gegebenenfalls verzweigte C₁-C₈-Alkyl- oder C₁-C₈-Alkoxyreste stehen, mit der Maßgabe, dass mindestens einer der Reste für eine C₁-C₈-Alkoxygruppe steht,
R für gegebenenfalls verzweigte Alkylenradikale mit 1 bis 8 Kohlenstoffatomen steht,
R' für Wasserstoff, C₁-C₈-Alkylreste, C₆-C₁₀-Arylreste oder Reste der allgemeinen Formel (II) steht 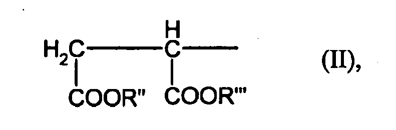 wobei
R" und R''' gleiche oder verschiedene, gegebenenfalls verzweigte Alkylreste mit 1 bis 8 Kohlenstoffatomen bedeuten.

2. Alkoxysilan- und OH-Endgruppen aufweisende Polyurethanprepolymere gemäß Anspruch 1, **dadurch gekennzeichnet, dass** Polyurethankomponente A) durch unvollständige, bei einem Umsatz von 70-85% der OH-Gruppen der Polyolkomponente gestoppte Umsetzung von i) und ii) hergestellt wird.

3. Alkoxysilan- und OH-Endgruppen aufweisende Polyurethanprepolymere gemäß Anspruch 1, **dadurch gekennzeichnet, dass** zur Herstellung der Polyurethanprepolymere A) Polypropylenoxydpolyether mit einer terminalen Unsättigung von maximal 0,04 mÄq/g und einem mittleren, aus OH-Gehalt und Funktionalität berechneten Molekulargewicht von 3000 bis 20000 eingesetzt werden.

4. Alkoxysilan- und OH-Endgruppen aufweisende Polyurethanprepolymere gemäß Anspruch 1, **dadurch gekennzeichnet, dass** es sich bei dem Rest R' um einen Rest der allgemeinem Formel (II) handelt.

5. Alkoxysilan- und OH-Endgruppen aufweisende Polyurethanprepolymere gemäß Anspruch 1, **dadurch gekennzeichnet, dass** X, Y und Z unabhängig voneinander für Methoxy oder Ethoxy stehen.

6. Verfahren zur Herstellung von Alkoxysilan- und OH-Endgruppen aufweisenden Polyurethanprepolymeren gemäß Anspruch 1 bis 5 durch Umsetzung von
A) Polyurethanprepolymeren, hergestellt durch unvollständige, bei einem Umsatz von 50 bis 90 % der OH-Gruppen der Polyolkomponente gestoppte Umsetzung von
i) einer aromatischen, aliphatischen oder cycloaliphatischen Diisocyanatkomponente mit einem NCO-Gehalt von 20 bis 60 Gew.-% mit
ii) einer Polyolkomponente, die aus einem Polyoxyalkylendiol besteht, das ein Molekulargewicht von 3000 bis 20000 aufweist
mit
B) Alkoxysilan- und Aminogruppen aufweisenden Verbindungen der Formel (I) 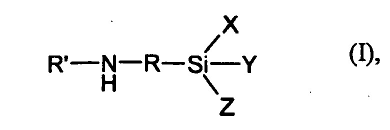 in welcher
X, Y, Z für gleiche oder verschiedene gegebenenfalls verzweigte C₁-C₈-Alkyl- oder C₁-C₈-Alkoxyreste stehen, mit der Maßgabe, dass mindestens einer der Reste für eine C₁-C₈-Alkoxygruppe steht,
R für gegebenenfalls verzweigte Alkylenradikale mit 1 bis 8 Kohlenstoffatomen steht,
R' für gegebenenfalls verzweigte C₁-C₈-Alkylreste, C₆-C₁₀-Arylreste oder Reste der allgemeinen Formel (II) steht 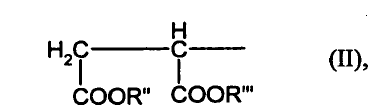 wobei
R" und R''' gleiche oder verschiedene gegebenenfalls verzweigte Alkylreste mit 1 bis 8 Kohlenstoffatomen bedeuten.

7. Verwendung der Polyurethanprepolymere gemäß Anspruch 1 als Bindemittel zur Herstellung von niedermoduligen Dichtstoffen, Klebstoffen, Primern und Beschichtungen.

8. Dichtstoffe basierend auf den Polyurethanprepolymeren gemäß Anspruch 1.

9. Klebstoffe basierend auf den Polyurethanprepolymeren gemäß Anspruch 1.

10. Primer und Beschichtungen basierend auf den Polyurethanprepolymeren gemäß Anspruch 1.

11. Mit Dichtstoffen gemäß Anspruch 8 gedichtete Substrate.

12. Mit Klebstoffen gemäß Anspruch 9 verklebte Substrate.

13. Mit Primern und Beschichtungen gemäß Anspruch 10 geprimerte bzw. beschichtete Substrate.

## Claims

1. Polyurethane prepolymers having terminal alkoxysilane and OH groups obtainable by reacting
A) polyurethane prepolymers prepared by incomplete conversion, stopped on conversion of 50 to 90% of the OH groups of the polyol component, of
i) an aromatic, aliphatic or cycloaliphatic diisocyanate component with an NCO content of 20 to 60% by weight with
ii) a polyol component which consists of a polyoxyalkylene diol with a molecular weight of 3000 to 20 000, with
B) compounds having alkoxysilane and amino groups, of formula (I) 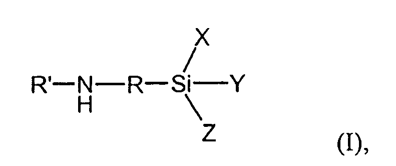
in which
X, Y, Z are the same or different and represent optionally branched C1- C8 alkyl or C1-C8 alkoxy radicals, provided that at least one of the radicals represents a C1-C8 alkoxy group,
R represents optionally branched alkylene radicals with 1 to 8 carbon atoms,
R' represents hydrogen, C1-C8 alkyl radicals, C6-C10 aryl radicals or radicals of general formula (II) 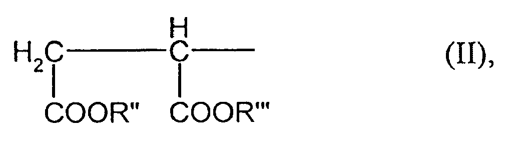 where
R" and R''' are the same or different and represent optionally branched alkyl radicals with 1 to 8 carbon atoms.

2. Polyurethane prepolymers having terminal alkoxysilane and OH groups according to claim 1, **characterised in that** the polyurethane component A) is prepared by incomplete conversion of i) and ii), stopped on conversion of 70-85% of the OH groups in the polyol component.

3. Polyurethane prepolymers having terminal alkoxysilane and OH groups according to claim 1, **characterised in that** to prepare the polyurethane prepolymers A) polypropylene oxide polyether is used, with a maximum terminal unsaturation of 0.04 meq/g and a mean molecular weight, calculated from the OH content and functionality, of 3000 to 20 000.

4. Polyurethane prepolymers having terminal alkoxysilane and OH groups according to claim 1, **characterised in that** the radical R' is a radical of general formula (II).

5. Polyurethane prepolymers having terminal alkoxysilane and OH groups according to claim 1, **characterised in that** X, Y and Z represent methoxy or ethoxy independently of each other.

6. A method of preparing polyurethane prepolymers having terminal alkoxysilane and OH groups according to any one of claims 1 to 5, by reacting
A) polyurethane prepolymers prepared by incomplete conversion, stopped on conversion of 50 to 90% of the OH groups of the polyol component, of
i) an aromatic, aliphatic or cycloaliphatic diisocyanate component with an NCO content of 20 to 60% by weight with
ii) a polyol component which consists of a polyoxyalkylene diol with a molecular weight of 3000 to 20 000, with
B) compounds having alkoxysilane and amino groups, of formula (I) 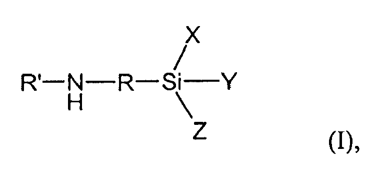
in which
X, Y, Z are the same or different and represent optionally branched C1- C8 alkyl or C1-C8 alkoxy radicals, provided that at least one of the radicals represents a C1-C8 alkoxy group,
R represents optionally branched alkylene radicals with 1 to 8 carbon atoms,
R' represents optionally branched, C1-C8 alkyl radicals, C6-C10 aryl radicals or radicals of general formula (II) 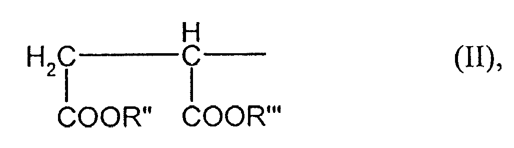 where
R" and R''' are the same or different and represent optionally branched alkyl radicals with 1 to 8 carbon atoms.

7. Use of polyurethane prepolymers according to claim 1 as binders for producing low-modulus sealants, adhesives, primers and coatings.

8. Sealants based on the polyurethane prepolymers according to claim 1.

9. Adhesives based on the polyurethane prepolymers according to claim 1.

10. Primers and coatings based on the polyurethane prepolymers and OH according to claim 1.

11. Substrates sealed with sealants according to claim 8.

12. Substrates glued with adhesives according to claim 9.

13. Substrates primed and/or coated with primers and coatings according to claim 10.

## Revendications

1. Prépolymères de polyuréthane présentant des groupes terminaux alcoxysilane et OH pouvant être obtenus en faisant réagir
A) des prépolymères de polyuréthane préparés par une réaction incomplète, stoppée après la conversion de 50 à 90 % des groupes OH du composant polyol,
i) d'un composant diisocyanate aromatique, aliphatique ou cycloaliphatique ayant une teneur en NCO de 20 à 60% en poids avec
ii) un composant polyol constitué d'un polyoxyalkylène diol ayant une masse moléculaire dans la plage de 3 000 à 20 000,
avec
B) des composés présentant des groupes alcoxysilane et amino de formule (I) 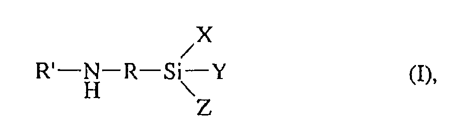 dans laquelle
X, Y, Z représentent des restes alkyle en C₁ à C₈ ou alkoxy en C₁ à C₈ identiques ou différents et le cas échéant ramifiés, à la condition que l'un au moins de ccs restes soit un groupe alcoxy en C₁ à C₈,
R représente des radicaux alkylène de à 8 atomes de carbone, le cas échéant ramifiés,
R' représente l'hydrogène, des restes alkyle en C₁ à C₈, des restes aryle en C₆ à C₁₀ ou des restes de formule générale (II) 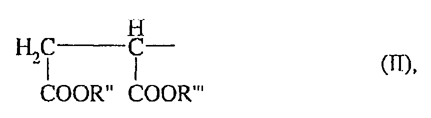
dans laquelle
R" et R"' sont des restes alkyle de 1 à 8 atomes de carbone, identiques ou différents et le cas échéant ramifiés.

2. Prépolymères de polyuréthane présentant des groupes terminaux alcoxysilane et OH selon la revendication 1, **caractérisés en ce que** le composant polyuréthane A) est préparé par une réaction incomplète de i) et ii), stoppée après la conversion de 70 à 85% des groupes OH du composant polyol.

3. Prépolymères de polyuréthane présentant des groupes terminaux alcoxysilane et OH selon la revendication 1, **caractérisés en ce que** l'on utilise pour préparer les prépolymères de polyuréthane A) des polyéthers de polyoxyde de propylène ayant une insaturation terminale de 0,04 méq/g au maximum et une masse moléculaire moyenne, calculée à partir de la teneur en OH et de la fonctionnalité, dans la plage de 3 000 à 20 000.

4. Prépolymères de polyuréthane présentant des groupes terminaux alcoxysilane et OH selon la revendication 1, **caractérisés en ce que** le reste R' est un reste de formule générale (II).

5. Prépolymères de polyuréthane présentant des groupes terminaux alcoxysilane et OH selon la revendication 1, **caractérisés en ce que** X, Y et Z représentent indépendamment les uns des autres des groupes méthoxy ou éthoxy.

6. Procédé de production de prépolymères de polyuréthane présentant des groupes terminaux alcoxysilane et OH selon les revendications 1 à 5, qui consiste à faire réagir
A) des prépolymères de polyuréthane préparés par une réaction incomplète, stoppée après la conversion de 50 à 90 % des groupes OH du composant polyol,
i) d'un composant diisocyanate aromatique, aliphatique ou cycloaliphatique ayant une teneur en NCO de 20 à 60% en poids avec
ii) un composant polyol constitué d'un polyoxyalkylène diol ayant une masse moléculaire dans la plage de 3 000 à 20 000,
avec
B) des composés présentant des groupes alcoxysilane et amino de formule (I) 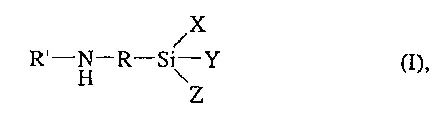
dans laquelle
X, Y, Z représentent des restes alkyle en C₁ à C₈ ou alcoxy en C₁ à C₈ identiques ou différents et le cas échéant ramifiés, à la condition que l'un au moins de ces restes soit un groupe alcoxy en C₁ à C₈,
R représente des radicaux alkylène de à 8 atomes de carbone, le cas échéant ramifiés,
R' représente l'hydrogène, des restes alkyle en C₁ à C₈, des restes aryle en C₆ à C₁₀ ou des restes de formule générale (II) 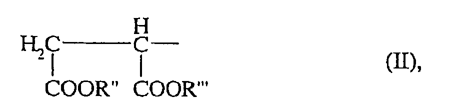
dans laquelle
R" et R"' sont des restes alkyle de 1 à 8 atomes de carbone, identiques ou différents et le cas échéant ramifiés.

7. Utilisation des prépolymères de polyuréthane selon la revendication 1 comme liants pour fabriquer des produits d'étanchéité, des adhésifs, des mastics et des,revêtements à faible module.

8. Produits d'étanchéité à base des prépolymères de polyuréthane selon la revendication 1.

9. Adhésifs à base des prépolymères de polyuréthane selon la revendication 1.

10. Mastics et revêtements à base des prépolymères de polyuréthane selon la revendication 1.

11. Substrats étanchéifiés avec des produits d'étanchéité selon la revendication 8.

12. Substrats encollés avec des adhésifs selon la revendication 9.

13. Substrats mastiqués ou revêtus avec des mastics ou des revêtements selon la revendication 10.
